# EUROPÄISCHE PATENTANMELDUNG

(11) **EP 0 917 384 A2**
(43) Veröffentlichungstag der Anmeldung: **19.05.1999**
(21) Anmeldenummer: 98114844.8
(22) Anmeldetag: 07.08.1998
(51) Int. Cl.: H04Q 7/38

(54) **Verfahren zum Betreiben einer Kommunikationsanlage**

(30) Priorität: 08.10.1997 DE 19744391
(71) Anmelder: ROBERT BOSCH GMBH, 70442 Stuttgart (DE)
(72) Erfinder: Ertner, Klaus, 65527 Niederhausen (DE); Vogel, Peter, 61194 Niddatal (DE); Gleisenberger, Jutta, 61169 Friedberg (DE); Letournel, Anne-Catherine, 92380 Garches (FR); Ruf, Patrick, 78100 Saint Germain (FR)

(57) **Zusammenfassung**

Es ist eine Kommunikationsanlage (1) beschrieben, die mindestens zwei Anschlußeinheiten (2, 3, 4) aufweist, an die mindestens ein mobiles und ein weiteres Endgerät (B, A) angeschlossen sind. Es kann eine Verbindung von dem mobilen Endgerät (B) über die erste Anschlußeinheit (2) zu einer Schalteinheit (11) und von dort über die zugehörige Anschlußeinheit (3) zu dem weiteren Endgerät (A) aufgebaut werden. Zwischen der ersten Anschlußeinheit (2) und der Schalteinheit (11) ist eine Weitergabeeinheit (10) vorgesehen, die die Verbindung von der Schalteinheit (11) zu der ersten Anschlußeinheit (2) auftrennen und eine Verbindung von der Schalteinheit (11) zu einer zweiten Anschlußeinheit (4) aufbauen kann.

## Beschreibung

Die Erfindung betrifft ein Verfahren zum Betreiben einer Kommunikationsanlage, bei dem eine Verbindung von einem mobilen Endgerät über eine erste Anschlußeinheit zu einer Schalteinheit und von dort über eine zugehörige Anschlußeinheit zu einem weiteren Endgerät aufgebaut wird. Des weiteren betrifft die Erfindung eine Kommunikationsanlage, die mindestens zwei Anschlußeinheiten aufweist, an die mindestens ein mobiles und ein weiteres Endgerät angeschlossen sind, wobei eine Verbindung von dem mobilen Endgerät über die erste Anschlußeinheit zu einer Schalteinheit und von dort über die zugehörige Anschlußeinheit zu dem weiteren Endgerät aufgebaut werden kann.

Eine derartige Kommunikationsanlage ist beispielsweise aus dem Bereich der privaten Telefonnetze bekannt, wie sie unter anderem in Krankenhäusern udgl. eingesetzt werden.

Dort ist z.B an eine der Anschlußeinheiten der Kommunikationsanlage ein schnurgebundenes Telefon angeschlossen, während mit einer anderen Anschlußeinheit die Basisstation eines schnurlosen Telefons verbunden ist. Über die beiden Anschlußeinheiten und die Schalteinheit der Kommunikationsanlage kann dann eine Verbindung zwischen den beiden Telefonen aufgebaut werden.

An eine derartige Kommunikationsanlage können eine Mehrzahl von Anschlußeinheiten und damit eine Mehrzahl von Basisstationen für schnurlose Telefone angeschlossen werden. Damit ist es möglich, die Basisstationen in dem Krankenhaus derart zu verteilen, daß jedes schnurlose Telefon in jedem Moment mit einer der Basistationen kommunizieren kann. Damit ist ein Benutzer eines derartigen schnurlosen Telefons nicht nur im Sende-/Empfangsbereich einer Basisstation, sondern in einem größeren örtlichen Bereich jederzeit erreichbar.

Bei diesem Aufbau der Kommunikationsanlage ist es aber möglich, daß sich ein Benutzer während eines Telefonats von dem Sende-/Empfangsbereich einer ersten Basisstation in den Sende-/Empfangsberich einer zweiten Basisstation bewegt. In diesem Fall muß ein unterbrechungsfreier Übergang von der ersten auf die zweite Basisstation erfolgen.

Aufgabe der Erfindung ist es, ein Kommunikationssystem zu schaffen, das einen derartigen Übergang von der ersten auf eine zweite Anschlußeinheit bereitstellt.

Diese Aufgabe wird bei einem Verfahren der eingangs genannten Art bzw. bei einer Kommunikationsanlage der eingangs genannten Art dadurch gelöst, daß die Verbindung von der Schalteinheit zu der ersten Anschlußeinheit aufgetrennt und eine Verbindung von der Schalteinheit zu der zweiten Anschlußeinheit aufgebaut wird.

Der Übergang von der ersten zu der zweiten Anschlußeinheit erfolgt also nicht in der Schalteinheit oder in einer der Anschlußeinheiten, sondern dazwischen in einer Weitergabeeinheit. Von dieser wird die Verbindung zwischen der Schalteinheit und der ersten Anschlußeinheit aufgetrennt, um dann ausgehend von dieser Auftrennung die neue Verbindung zu der zweiten Anschlußeinheit aufzubauen.

Diese Vorgehensweise hat den Vorteil, daß die Schalteinheit mit dem Übergang von der ersten auf die zweite Anschlußeinheit nicht belastet wird. Die Schalteinheit kann somit modulartig aufgebaut und eingesetzt werden, ohne daß auf mögliche Übergange zwischen Anschlußeinheiten geachtet werden müßte.

Ein weiterer Vorteil besteht darin, daß die Vermittlungsdaten udgl. der bestehenden Verbindung nicht geändert werden müssen. Für die Schalteinheit besteht dieselbe Verbindung weiter, so daß kein Anlaß für irgendwelche Änderungen besteht. Der Übergang von der ersten zu der zweiten Anschlußeinheit wird von der Schalteinheit nicht zur Kenntnis genommen, so daß insoweit auch keine Reaktionen von der Schalteinheit bezüglich der Vermittlungsdaten odgl. ausgelöst werden können.

Des weiteren sind auch die Anschlußeinheiten mit dem Übergang als solchem nicht belastet. Die Anschlußeinheiten können deshalb ebenfalls modulartig aufgebaut und eingesetzt werden.

Der Übergang wird von der zwischen den Anschlußeinheiten und der Schalteinheit angeordneten Weitergabeeinheit durchgeführt. Die Weitergabeeinheit muß dabei gegenständlich nicht vorhanden sein, sondern wird üblicherweise als logischer Funktionsablauf beispielsweise in der Form eines Programms auf einem Rechengerät realisisert sein. Die Weitergabeeinheit führt die Auftrennung der bestehenden Verbindung und den Aufbau der neuen Verbindung dadurch aus, daß die von der Schalteinheit weitergegebenen Informationen nicht mehr an die erste Anschlußeinheit adressiert werden, sondern an die zweite Anschlußeinheit, und umgekehrt.

Besonders zweckmäßig ist es, wenn die Verbindung zu der ersten Anschlußeinheit aufgetrennt und die Verbindung zu der zweiten Anschlußeinheit aufgebaut wird, ohne daß die Schalteinheit dadurch beeinflußt wird. Auf diese Weise ergeben sich für die Schalteinheit keine Änderungen aufgrund des Übergangs von der ersten zu der zweiten Anschlußeinheit. Für die Schalteinheit wird also permanent ein Zustand simuliert, als ob gar kein Übergang von der ersten auf die zweite Anschlußeinheit stattgefunden hätte.

Bei einer vorteilhaften Ausgestaltung der Erfindung, bei der die erste und die zweite Anschlußeinheit jeweils einen Sende-/Empfangsbereich aufweisen, innerhalb dem eine Verbindung zu dem mobilen Endgerät aufgebaut werden kann, wird die Verbindung zu der ersten Anschlußeinheit aufgetrennt und die Verbindung zu der zweiten Anschlußeinheit aufgebaut, wenn das mobile Endgerät den Sende-/Empfangsbereich der ersten Anschlußeinheit verläßt und in den Sende-/Empfangsbereich der zweiten Anschlußeinheit eintritt.

Auf dieser Weise wird ein unterbrechungsfreier Übergang von der ersten zu der zweiten Anschlußeinheit gewährleistet. Da dieser Übergang, wie erläutert, von der Weitergabeeinheit allein durchgeführt wird, ist sichergestellt, daß durch den Übergang in keinem Fall Informationen verloren gehen. Die Weitergabeeinheit kann den Übergang derart wählen und durch entsprechende Maßnahmen derart ausgestalten, daß in jedem Fall die Verbindung mit der zweiten Anschlußeinheit genau dort einsetzt, wo die Verbindung mit der ersten Anschlußeinheit geendet hat.

Bei einer vorteilhaften Weiterbildung der Erfindung wird das Eintreten des mobilen Endgeräts in den Sende-/Empfangsbereich der zweiten Anschlußeinheit gemeldet, und es wird danach der Übergang von der ersten auf die zweite Anschlußeinheit ausgelöst. Die Meldung wird dabei an die Weitergabeeinheit übermittelt, so daß danach die Weitergabeeinheit den Übergang von der ersten auf die zweite Anschlußeinheit auslösen kann.

Besonders zweckmäßig ist es, wenn der Übergang durchgeführt wird, wenn die Verbindung zu der zweiten Anschlußeinheit besser ist als zu der ersten Anschlußeinheit. Auf diese Weise wird gewährleistet, daß immer die bessere Verbindung zwischen der Schalteinheit und dem mobilen Endgerät vorhanden ist.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Figur 1: zeigt eine schematische Blockdarstellung eines ersten Ausführungsbeispiels einer erfindungsgemäßen Kommunikationsanlage, und
- Figur 2: zeigt eine schematische Blockdarstellung eines zweiten Ausführungsbeispiels einer erfindungsgemäßen Kommunikationsanlage.

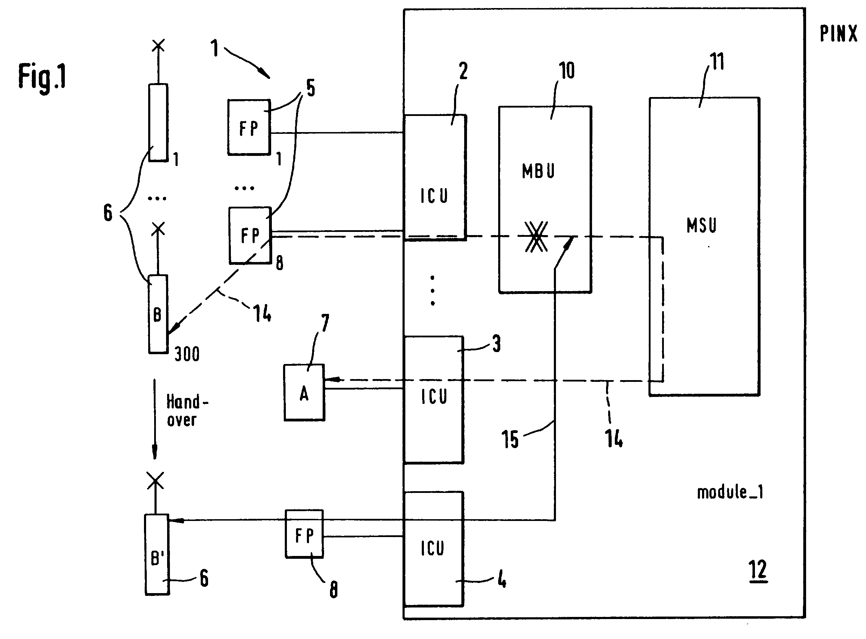

In der Figur 1 ist eine Kommunikationsanlage 1 (PINX = private integrated network exchange) dargestellt, mit der z.B. ein privates Telefonnetz in einem Krankenhaus aufgebaut werden kann. Die Kommunikationsanlage 1 weist eine Anzahl von Anschlußeinheiten 2, 3, 4 (ICU = interface control unit, DECT = digital enhanced ... ) auf, an die Endgeräte angeschlossen werden können. An jede der Anschlußeinheiten 2, 3, 4 kann dabei ein Endgerät oder mehrere Endgeräte angeschlossen werden.

An die Anschlußeinheit 2 sind insgesamt beispielsweise acht Basisstationen 5 angeschlossen. Diesen Basisstationen 5 können schnurlose Telefone 6 zugeordnet werden. Dies bedeutet, daß eine Verbindung aufgebaut werden kann zwischen jeder der Basisstationen 5 und jedem der Telefone 6. Ein Übergang einer Verbindung zwischen einem der Telefone 6 und einer der Basisstationen 5 zu einer Verbindung desselben Telefons 6 zu einer anderen Basisstation 5 ist dabei bekannterweise auch während eines Telefonats möglich, sofern es sich nur um die an die Anschlußeinheit 2 angeschlossenen Basisstationen 5 handelt.

An die Anschlußeinheit 3 ist als Endgerät ein schnurgebundenes Telefon 7 angeschlossen. Des weiteren ist an die Anschlußeinheit 4 als Endgerät eine weitere Basisstation 8 für ein schnurloses Telefon angeschlossen.

Die Kommunikationsanlage 1 weist des weiteren eine Weitergabeeinheit 10 (MBU = mobility unit) und eine Schalteinheit 11 (MSU = module switching unit) auf. Die Anschlußeinheiten 2, 3, 4, die Weitergabeeinheit 10 und die Schalteinheit 11 bilden ein Modul 12 (module_1) der Kommunikationsanlage 1.

Eine Verbindung zwischen dem mit der Bezugsziffer "A" gekennzeichneten schnurgebundenen Telefon 7 und dem mit der Bezugsziffer "B" gekennzeichneten schnurlosen Telefon 6 erfolgt dadurch, daß zuerst eine Verbindung von dem schnurlosen Telefon 6 zu einer der Basisstationen 5 und von dort zu der Anschlußeinheit 2 aufgebaut wird. Dann wird die Verbindung über die Weitergabeeinheit 10 zu der Schalteinheit 11 fortgesetzt. Von der Schalteinheit 11 wird schließlich eine Verbindung zu der Anschlußeinheit 3 und von dort zu dem schnurgebundenen Telefon 7 aufgebaut.

Die gesamte beschriebene Verbindung ist in der Figur 1 mit einer gestrichelten Linie 14 dargestellt.

Jede der Basisstationen 5, 8 weist einen Sende-/Empfangsbereich auf, in dem eines der schnurlosen Telefone 6 mit der jeweiligen Basisstation 5, 8 kommunizieren kann. Dieser Bereich beträgt beispielsweise etwa 50 Meter bis etwa 300 Meter.

Bewegt sich ein Benutzer mit dem schnurlosen Telefon 6 "B" während eines Telefonats aus dem Sende-/Empfangsbereich der Basisstationen 5 heraus und betritt den Sende-/Empfangsbereich der Basisstation 8, so ist dies in der Figur 1 als "Handover" bezeichnet. Dieser Fall unterscheidet sich von dem eingangs erläuterten Fall dadurch, daß die Basisstation 8 nicht mehr zu derjenigen Anschlußeinheit 2 gehört, an die die Basisstationen 5 angeschlossen sind. Das sich nunmehr im Sende-/Empfangsbereich der Basisstation 8 befindliche schnurlose Telefon 6 ist dort mit der Bezugsziffer "B'" gekennzeichnet.

Die Basisstation 8 meldet den Eintritt des schnurlosen Telefons 6 "B'" an die zugehörige Anschlußeinheit 4 und diese gibt diese Meldung an die Weitergabeeinheit 10 weiter. Die Weitergabeeinheit 10 prüft, zu welcher der beiden Basisstationen 5, 8 eine bessere Verbindung zu dem schnurlosen Telefon 6 "B'" besteht. Dies kann aufgrund von Messungen der Feldstärke odgl. insbesondere von die Basisstationen 5, 8 durchgeführt werden.

Sobald die Verbindung des schnurlosen Telefons 6 "B'" zu der Basisstation 8 besser ist als die Verbindung zu der Basisstation 5, dann trennt die Weitergabeeinheit 10 die Verbindung zwischen der zu den Basisstationen 5 zugehörigen Anschlußeinheit 2 und der Schalteinheit 11 auf.

Gleichzeitig baut die Weitergabeeinheit 10 eine Verbindung von der Schalteinheit 11 zu der zu der Basisstation 8 zugehörigen Anschlußeinheit 4 auf.

Die nunmehr geänderte Verbindung ist in der Figur 1 mit einer durchgezogenen Linie 15 dargestellt.

Insgesamt ist somit ein Übergang erfolgt von einer Verbindung zwischen dem schnurgebundenen Telefon 7 "A" und dem schnurlosen Telefon 6 "B" im Sende-/Empfangsbereich der Basisstationen 5 zu einer Verbindung zwischen dem schnurgebundenen Telefon 7 "A" und dem schnurlosen Telefon 6 "B'" im Sende-/Empfangsbereich der Basisstation 8. Der Übergang ist dabei von der Weitergabeeinheit 10 gesteuert und durchgeführt worden. Die Schalteinheit 11 ist von dem Übergang nicht beeinflußt worden.

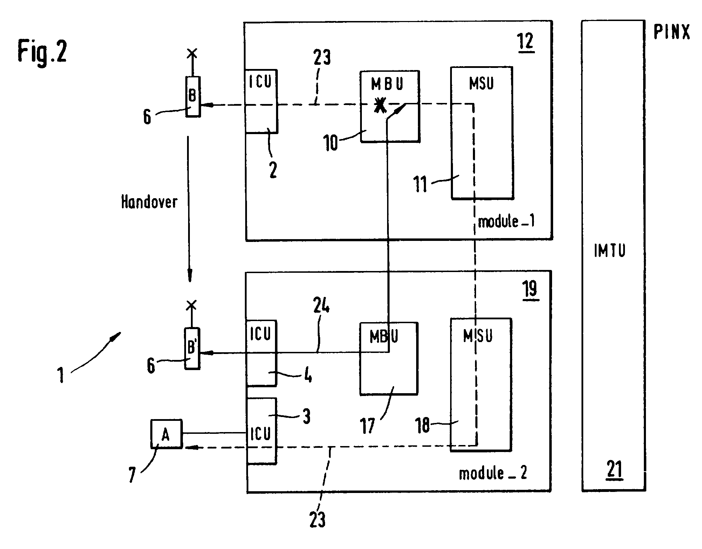

In der Figur 2 ist die Kommunikationsanlage 1 im Vergleich zur Figur 1 erweitert. Übereinstimmende Bauteile und Funktionen sind deshalb mit übereinstimmenden Bezugszeichen gekennzeichnet. Die Basisstationen 5 der schnurlosen Telefone 6 sind in der Figur 2 nicht dargestellt.

In der Figur 2 ist nicht nur die Weitergabeeinheit 10 und die Schalteinheit 11 vorhanden, sondern es ist eine weitere Weitergabeeinheit 17 und eine weitere Schalteinheit 18 vorgesehen. Die Anschlußeinheit 2, die Weitergabeeinheit 10 und die Schalteinheit 11 bilden das erste Modul 12 (module_1) und die Anschlußeinheiten 3, 4, die Weitergabeeinheit 17 und die Schalteinheit 18 bilden ein zweites Modul 19 (module_2).

Des weiteren ist eine Transporteinheit 21 (IMTU = inter module transport unit) vorgesehen, mit der die Module 12, 19 miteinander verknüpft sind.

Eine Verbindung zwischen dem mit der Bezugsziffer "A" gekennzeichneten schnurgebundenen Telefon 7 und dem mit der Bezugsziffer "B" gekennzeichneten schnurlosen Telefon 6 erfolgt dadurch, daß zuerst eine Verbindung von dem schnurlosen Telefon 6 zu der Anschlußeinheit 2 aufgebaut wird. Dann wird die Verbindung über die Weitergabeeinheit 10 zu der Schalteinheit 11 und von dort zu der Schalteinheit 18 fortgesetzt. Von der Schalteinheit 18 wird schließlich eine Verbindung zu der Anschlußeinheit 3 und von dort zu dem schnurgebundenen Telefon 7 aufgebaut.

Die gesamte beschriebene Verbindung ist in der Figur 2 mit einer gestrichelten Linie 23 dargestellt.

Bewegt sich ein Benutzer mit dem schnurlosen Telefon 6 "B" während eines Telefonats aus dem Sende-/Empfangsbereich der Anschlußeinheit 2 heraus und betritt den Sende-/Empfangsbereich der Anschlußeinheit 4, so ist dies in der Figur 2 als "Handover" bezeichnet. Das schnurlose Telefon 6 ist dort mit der Bezugsziffer "B'" gekennzeichnet.

Die Weitergabeeinheit 10 des ersten Moduls 12 trennt nunmehr die Verbindung zwischen der Anschlußeinheit 2 und der Schalteinheit 11 auf. Gleichzeitig baut die Weitergabeeinheit 10 eine Verbindung von der Schalteinheit 11 zu der Anschlußeinheit 4 auf. Diese Verbindung erfolgt dabei über die Weitergabeeinheit 10 des ersten Moduls 12 und über die Weitergabeeinheit 17 des zweiten Moduls 19.

Die nunmehr geänderte Verbindung ist in der Figur 2 mit einer durchgezogenen Linie 24 dargestellt.

Insgesamt ist somit ein Übergang erfolgt von einer Verbindung zwischen dem schnurgebundenen Telefon 7 "A" und dem schnurlosen Telefon 6 "B" im Sende-/Empfangsbereich der Anschlußeinheit 2 zu einer Verbindung zwischen dem schnurgebundenen Telefon 7 "A" und dem schnurlosen Telefon 6 "B'" im Sende-/Empfangsbereich der Anschlußeinheit 4. Der Übergang ist dabei von der Weitergabeeinheit 10 des ersten Moduls 12 gesteuert und durchgeführt worden. Die Schalteinheiten 11, 18 sind von dem Übergang nicht beeinflußt worden.

Der wesentliche Unterschied zwischen der Figur 1 und der Figur 2 besteht darin, daß bei der Figur 1 die beiden Anschlußeinheiten 2, 4, zwischen denen ein Übergang erfolgt, zu demselben Modul 12 gehören, während bei der Figur 2 die genannten Anschlußeinheiten 2, 4, zu unterschiedlichen Modulen 12, 19 gehören.

## Patentansprüche

1. Verfahren zum Betreiben einer Kommunikationsanlage (1), bei dem eine Verbindung von einem mobilen Endgerät (B) über eine erste Anschlußeinheit (2) zu einer Schalteinheit (11) und von dort über eine zugehörige Anschlußeinheit (3) zu einem weiteren Endgerät (A) aufgebaut wird, **dadurch gekennzeichnet**, daß die Verbindung von der Schalteinheit (11) zu der ersten Anschlußeinheit (2) aufgetrennt und eine Verbindung von der Schalteinheit (11) zu einer zweiten Anschlußeinheit (4) aufgebaut wird.

2. Verfahren nach Anspruch 1, dadurch gekennzeichnet, daß die Verbindung zu der ersten Anschlußeinheit (2) aufgetrennt und die Verbindung zu der zweiten Anschlußeinheit (4) aufgebaut wird, ohne daß die Schalteinheit (11) dadurch beeinflußt wird.

3. Verfahren nach einem der Ansprüche 1 oder 2, wobei die erste und die zweite Anschlußeinheit (2, 4) jeweils einen Sende-/Empfangsbereich aufweisen, innerhalb dem eine Verbindung zu dem mobilen Endgerät (B) aufgebaut werden kann, dadurch gekennzeichnet, daß die Verbindung zu der ersten Anschlußeinheit (2) aufgetrennt und die Verbindung zu der zweiten Anschlußeinheit (4) aufgebaut wird, wenn das mobile Endgerät (B) den Sende-/Empfangsbereich der ersten Anschlußeinheit (2) verläßt und in den Sende-/Empfangsbereich der zweiten Anschlußeinheit (4) eintritt.

4. Verfahren nach Anspruch 3, dadurch gekennzeichnet, daß das Eintreten des mobilen Endgeräts (B') in den Sende-/Empfangsbereich der zweiten Anschlußeinheit (4) gemeldet wird, und daß danach der Übergang von der ersten auf die zweite Anschlußeinheit (2, 4) ausgelöst wird.

5. Verfahren nach Anspruch 4, dadurch gekennzeichnet, daß der Übergang durchgeführt wird, wenn die Verbindung zu der zweiten Anschlußeinheit (4) besser ist als zu der ersten Anschlußeinheit (2).

6. Kommunikationsanlage (1), die mindestens zwei Anschlußeinheiten (2, 3, 4) aufweist, an die mindestens ein mobiles und ein weiteres Endgerät (B, A) angeschlossen sind, wobei eine Verbindung von dem mobilen Endgerät (B) über die erste Anschlußeinheit (2) zu einer Schalteinheit (11) und von dort über die zugehörige Anschlußeinheit (3) zu dem weiteren Endgerät (A) aufgebaut werden kann, dadurch gekennzeichnet, daß zwischen der ersten Anschlußeinheit (2) und der Schalteinheit (11) eine Weitergabeeinheit (10) vorgesehen ist, die die Verbindung von der Schalteinheit (11) zu der ersten Anschlußeinheit (2) auftrennen und eine Verbindung von der Schalteinheit (11) zu einer zweiten Anschlußeinheit (4) aufbauen kann.

7. Kommunikationsanlage (1) nach Anspruch 6, dadurch gekennzeichnet, daß von der Weitergabeeinheit (10) der Übergang von der ersten Anschlußeinheit (2) auf die zweite Anschlußeinheit (4) steuerbar ist.

8. Kommunikationsanlage (1) nach einem der Ansprüche 6 oder 7, dadurch gekennzeichnet, daß die erste und die zweite Anschlußeinheit (2, 4) zu demselben Modul (12) gehören.

9. Kommunikationsanlage (1) nach einem der Ansprüche 6 oder 7, bei dem mindestens zwei Module (12, 19) mit jeweils einer Anzahl von Anschlußeinheiten (2, 3, 4) vorgesehen sind, dadurch gekennzeichnet, daß die erste und die zweite Anschlußeinheit (2, 4) zu verschiedenen Modulen (12, 19) gehören.
